# EUROPEAN PATENT APPLICATION

(11) **EP 3 312 812 A1**
(43) Date of publication of application: **25.04.2018**
(21) Application number: 16306370.4
(22) Date of filing: 19.10.2016
(51) Int. Cl.: G08B 13/08, G06K 19/07, H01Q 1/22, G08B 29/16, G06K 19/077, G06K 7/00

(54) **METHOD, SYSTEM AND APPARATUS FOR DETECTING A STATUS OF A DOOR**

(71) Applicant: Thomson Licensing, 92130 Issy-les-Moulineaux (FR)
(72) Inventor: LOUZIR, Ali, 35576 Cesson-Sévigné Cedex (FR); KUMAR, Rupesh, 35576 Cesson-Sévigné Cedex (FR); LE NAOUR, Jean-Yves, 35576 Cesson-Sévigné Cedex (FR); GILBERTON, Philippe, 35576 Cesson-Sévigné Cedex (FR)
(74) Representative: Huchet, Anne

(57) **Abstract**

A method for detecting a status of a door is disclosed. A salient idea of the present principles is to interrogate a passive RFID tag comprising an integrated circuit connected to a first antenna part operatively couplable to and separable from a second antenna part, and to associate the operative separation / coupling of the two antenna parts with an operative status of a door. For example, the first antenna part of the RFID tag is adapted to be installed on the door, and the second antenna part is adapted to face the first antenna part as the door is closed and to not face the first antenna part as the door is open. Facing antenna parts are adapted to receive an operating energy from a RF carrier for sending a backscattered reply, and the first antenna part receiving a RF carrier while not facing the second antenna part, is further adapted to not receive a sufficient amount of operating energy for sending a backscattered reply

## Description

### 1. TECHNICAL FIELD

The technical field of the disclosed method, system and apparatus is related to sensors such as RFID tags and RFID interrogators, and to their deployment in smart homes or buildings.

### 2. BACKGROUND ART

Smart home and smart building applications generally rely on deploying sensors in the home or building environment so as to collect data and to provide enhanced services. An example of an interesting service is to monitor, report, or detect whether a window or a door is open or closed. Automatically detecting the operating status of a door / window represents many advantages for a user, especially when he is not present, and wants to be remotely informed. There are known methods based on battery powered sensors that are able to report an operating status of a door / window. Indeed the existing prior art methods rely on a local battery powered hardware so as to detect and report such operating state. A first drawback of battery powered sensors is the cost of the battery which impacts the cost of the whole solution. A second drawback is the required maintenance of the system: batteries need to be monitored and regularly changed. These drawbacks represent significant barriers in the deployment of low cost and ease of use sensors dedicated to smart home applications. New methods and sensors are desired for reporting an operating status of a door / window without requiring the sensor to be battery powered.

### 3. SUMMARY

A salient idea of the present principles is to interrogate a RFID tag comprising an integrated circuit connected to a first antenna part operatively couplable to and separable from a second antenna part, and to associate the operative separation / coupling of the two antenna parts with an operative status of a door. For example, the first antenna part of the RFID tag is adapted to be installed on the door, and the second antenna part is adapted to be coupled to the first antenna part, by facing the first antenna part as the door is closed and to be decoupled from the first antenna part as the door is open. Facing antenna parts are adapted to receive an operating energy from a RF carrier for sending a backscattered reply, and the first antenna part receiving a RF carrier while not facing the second antenna part, is further adapted to not receive a sufficient amount of operating energy for sending a backscattered reply.

To that end a method for detecting a status of a door is disclosed. The method comprises:
- sending a first request to a first tag comprising a first integrated circuit and a first antenna, the first antenna further comprising a first antenna part connected to the first integrated circuit, and a second antenna part being operatively couplable to and operatively separable from the first antenna part, wherein:
   ∘ one of either the first antenna part or the second antenna part is adapted to be installed on the door;
   ∘ the second antenna part is adapted to be coupled to the first antenna part as the door is closed, and to be separated from the first antenna part as the door is open;
- detecting a close status of the door in case a first confirmation in received from the first tag in response to the first request, said first request being received by the first tag as the first antenna part is coupled to the second antenna part.

According to a particularly advantageous variant, the method further comprises detecting an open status of the door in case no confirmation is received from the first tag in response to the first request sent by an interrogator as the first antenna part is separated from the second antenna part.

According to another particularly advantageous variant, the door is mounted in a doorframe, the first antenna part connected to the first integrated circuit being further configured to be installed in the doorframe.

According to another particularly advantageous variant, the second antenna part being coupled to the first antenna part comprises the second antenna part being electrically connected to the first antenna part, and the second antenna part being separated from the first antenna part comprises being electrically disconnected from the first antenna part.

According to another particularly advantageous variant, the second antenna part being coupled to the first antenna part comprises the second antenna part being electromagnetically coupled to the first antenna part, and the second antenna part being separated from the first antenna part comprises the second antenna part being electromagnetically decoupled from the first antenna part.

According to another particularly advantageous variant, the method further comprises sending a second request by the interrogator to a second tag, and confirming the detected open status of the door in case a second confirmation is further received from the second tag in response to the second request sent by the interrogator.

According to another particularly advantageous variant, the method further comprises reporting a failure of the detected open status of the door in case no second confirmation is received from the second tag in response to the second request sent by the interrogator.

According to another particularly advantageous variant, the second tag is installed closed to the first tag, the second tag further comprising:
- a second integrated circuit of a similar sensitivity as the first integrated circuit, and
- a second antenna of a similar gain as said first antenna as the first antenna part faces the second antenna part.

In a second aspect a tag device adapted to detect a status of a door is also disclosed. The tag device comprises a first tag further comprising:
a first integrated circuit;
a first antenna comprising a first antenna part connected to the first integrated circuit, and a second antenna part being operatively couplable to and operatively separable from the first antenna part, wherein
   one of either the first antenna part or the second antenna part is adapted to be installed on the door;
   the second antenna part is adapted to be coupled to the first antenna part as the door is closed, and to be separated from the first antenna part as the door is open;
the first integrated circuit being adapted to receive a first request sent by an interrogator as the first antenna part (211, 361) is coupled to the second antenna part (212, 362) and to transmit a first confirmation in response to the received first request.

According to a particularly advantageous variant, the first integrated circuit is further adapted to not receive the first request as the first antenna part is separated from the second antenna part.

According to a particularly advantageous variant, the first antenna part comprises a first electromagnetic coupling means and the second antenna part comprises a second electromagnetic coupling means, the second antenna part being electromagnetically coupled to the first antenna part as the first antenna part faces the second antenna part, and is electromagnetically decoupled from the first antenna part as the first antenna part does not face the second antenna part.

According to a particularly advantageous variant, the tag device further comprises a second tag located closed to the first tag, the second tag being configured to respond to a second request from the interrogator, the second tag further comprising a second integrated circuit of a similar sensitivity as the first integrated circuit, and a second antenna of a similar gain as the first antenna as the first antenna part is coupled to the second antenna part.

In a third aspect an interrogator device for detecting a status of a door is also disclosed. The interrogator device comprises:
- means for sending a first request to a first tag comprising a first integrated circuit and a first antenna, the first antenna further comprising a first antenna part connected to the first integrated circuit and a second antenna part being operatively couplable to and operatively separable from the first antenna part, wherein:
   ∘ one of either the first antenna part or the second antenna part is adapted to be installed on the door;
   ∘ the second antenna part is adapted to be coupled to the first antenna part as the door is closed, and to be separated from the first antenna part as the door is open;
- means for receiving a first confirmation from the first tag in response to the first request;
- means for detecting a close status of the door in case the first confirmation is received from the first tag in response to the first request, the first request being received by the first tag as the first antenna part is coupled to the second antenna part.

According to a particularly advantageous variant, the interrogator device further comprises:
- means for sending a second request to a second tag;
- means for confirming the detected open status of the door in case a second confirmation is further received from the second tag in response to the second request; and
- means for reporting a failure of the detected open status of the door in case no second confirmation is received from the second tag in response to the second request.

In a fourth aspect an interrogator device for detecting a status of a door is also disclosed. The interrogator device comprises a processor configured to:
- send a first request to a first tag comprising a first integrated circuit and a first antenna, the first antenna further comprising a first antenna part connected to the first integrated circuit and a second antenna part being operatively couplable to and operatively separable from the first antenna part, wherein:
   ∘ one of either the first antenna part or the second antenna part is adapted to be installed on the door;
   ∘ the second antenna part is adapted to be coupled to the first antenna part as the door is closed, and to be separated from the first antenna part as the door is open;
- receive a first confirmation from the first tag in response to the first request;
- detect a close status of the door in case the first confirmation is received from the first tag in response to the first request, the first request being received by the first tag as the first antenna part is coupled to the second antenna part.

According to a particularly advantageous variant, the processor is further configured to
- send a second request to a second tag;
- confirm the detected open status of the door in case a second confirmation is further received from the second tag in response to the second request; and
- report a failure of the detected open status of the door in case no second confirmation is received from the second tag in response to the second request.

In a fifth aspect, a computer program for detecting a status of a door is also disclosed. The computer program comprises program code instructions executable by at least one processor to perform the disclosed method in any variant.

In a sixth aspect, a computer-readable storage medium is also disclosed. The computer-readable storage medium stores computer-executable program instructions to enable a computer to perform the disclosed method.

In a seventh aspect the disclosed principles are also related to a computer program product comprising instructions of program code for execution by at least one processor to perform the disclosed methods

While not explicitly described, the present embodiments may be employed in any combination or sub-combination. For example, the present principles are not limited to the described variants, and any arrangement of variants and embodiments can be used. Moreover the present principles are not limited to the described electrical and electromagnetic coupling examples. The present principles are not further limited to the described coupling means and are applicable to any other form factors of conducting sheets. The present principles are not further limited to the described dipole-type antennas.

Besides, any characteristic, variant or embodiment described for the method is compatible with a device intended to process the disclosed method, with a computer program and with a computer-readable storage medium storing program instructions.

### 4. BRIEF DESCRIPTION OF THE DRAWINGS

- **Figure 1** illustrates the method for detecting a status of a door according to a specific and non-limiting embodiment of the present principles;
- **Figures 2a, 2b****,** **2c and 2d** depict several configurations where a tag device is used to detect a status of a door, wherein:

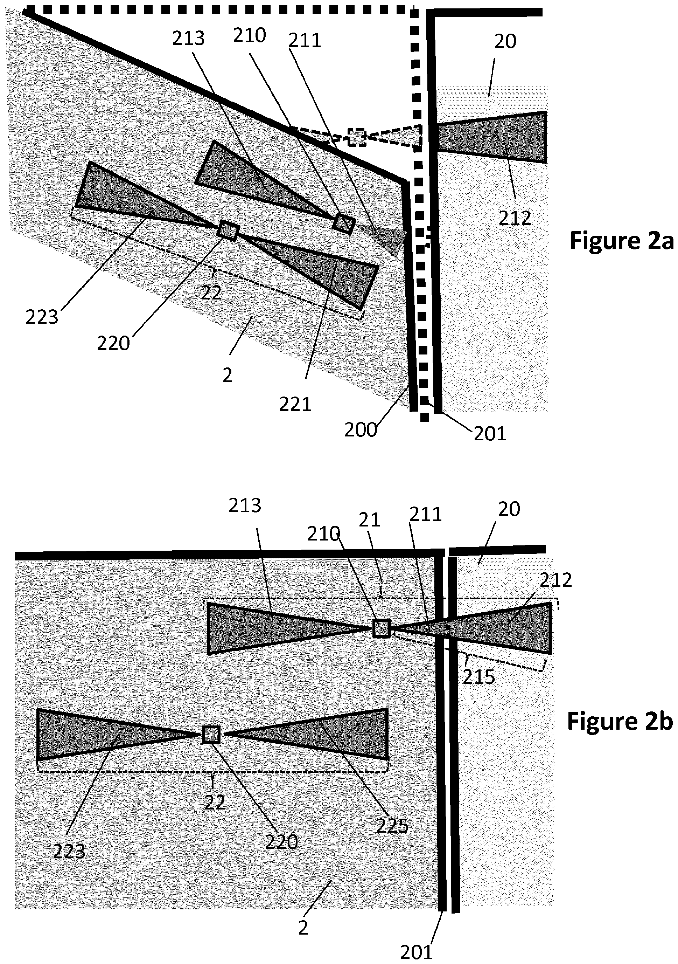

   - figure 2a and 2b respectively describe an open door and a closed door configuration according to a specific and non-limiting embodiment of the present principles;

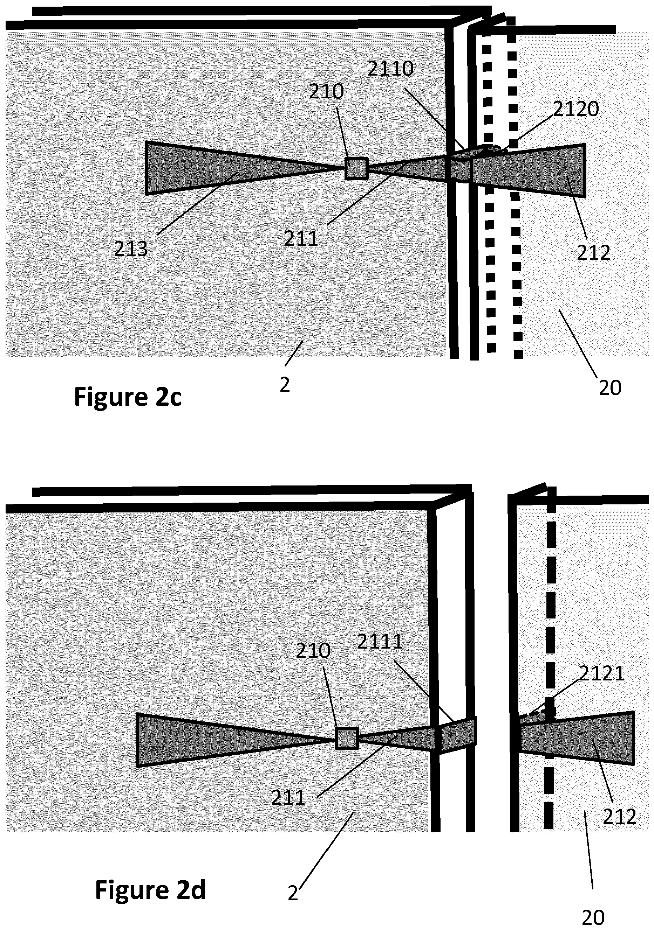

   - figure 2c and 2d describe a closed door according to two different specific and non-limiting embodiments of the present principles;

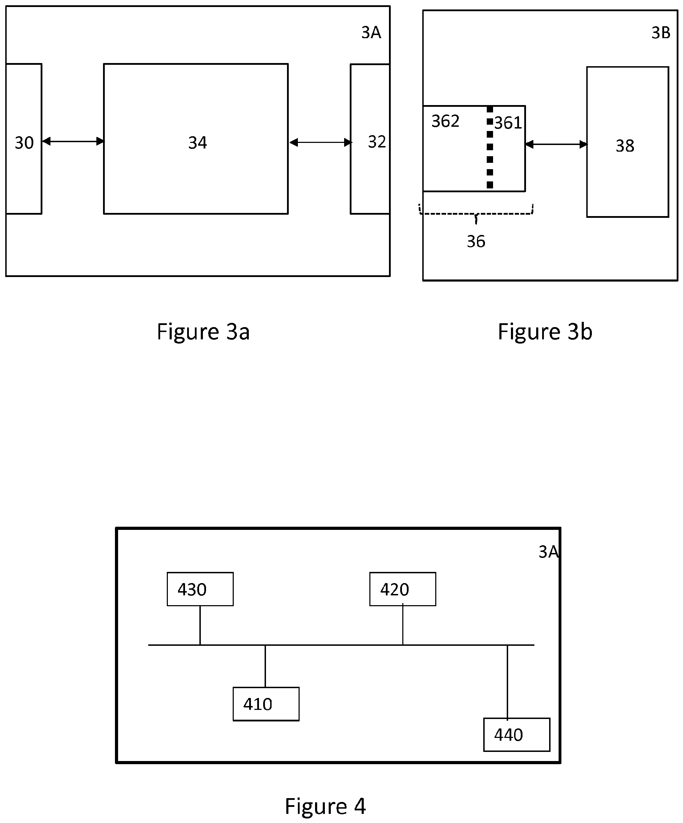

- **Figure 3a and 3b** respectively represent an interrogator processing device and a tag device for detecting a status of a door according to a specific and non-limiting embodiment of the present principles;
- **Figure 4** represents an exemplary architecture of the interrogator processing device of figure 3a according to a specific and non-limiting embodiment of the present principles.

### 5. DESCRIPTION OF EMBODIMENTS

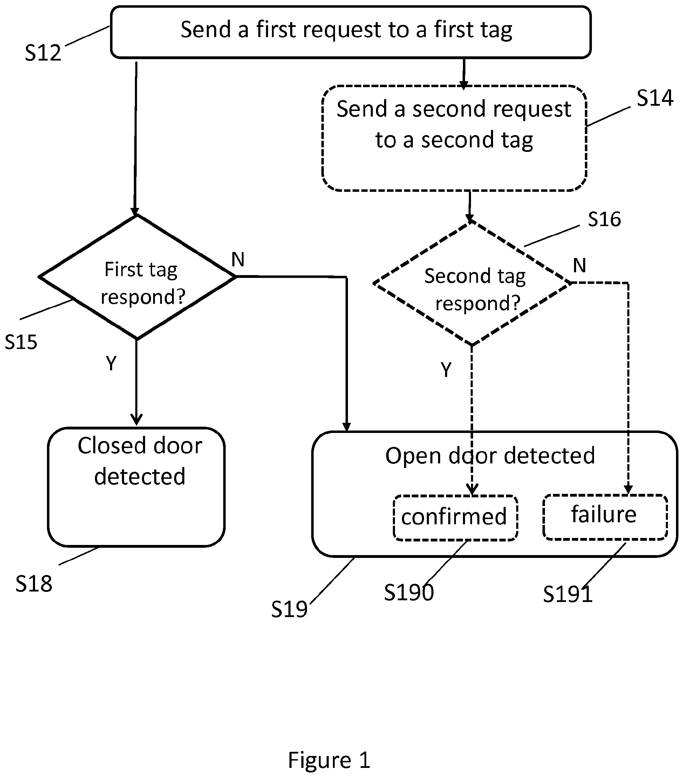

**Figure 1** **and** **Figure 2** depict a method for detecting an operating status 200, 201 of a door 2. More precisely the operating status 200, 201 of the door 2 is defined as determining whether the door is open 200, as illustrated on **Figure 2a** or closed 201, as illustrated on **Figure 2b**.

For the sake of clarity and without loss of generality, the disclosed principles are described with these two operating status 200, 201 being either open 200 or closed 201, but any other intermediary status, involving for example a numerical value is compatible with the disclosed principles. Furthermore, the disclosed principles are not limited to doors and are equally applicable to windows, or any kind of systems allowing to open and close an area.

The method involves a wireless interrogator interrogating one or more wireless tags 21, 22 by sending information to the one or more wireless tags 21, 22 using a RF (radio frequency) carrier. Wireless tags 21, 22 receive their operating energy from the received RF carrier. For the sake of clarity and without loss of generality, the disclosed principles are described through RFID tags and RFID interrogators, but any other kind of wireless tag, receiving an operating energy from a wireless interrogation signal, and any other kind of wireless interrogator communicating with those tags, are compatible with the disclosed principles.

In the step S12, a first request is sent by a wireless interrogator to a first RFID tag 21, illustrated in Figures 2a and 2b. The first RFID tag 21 comprises a first RFID integrated circuit 210 connected to for example a dipole type antenna of two arms 213, 215 of a similar size and composition, but any other kind of RFID antenna is compatible with the disclosed principles. One of the dipole arms, called the first antenna 215 comprises a first antenna part 211, connected to the first integrated circuit 210. The first antenna 215 further comprises a second antenna part 212 being operatively separable from and couplable to the first antenna part 211. More precisely, and depending on the door operating status, the first antenna part 211 is either coupled to the second antenna part 212, or separated from the second antenna part 212, as it will be further described below. To that end one of either the first antenna part 211, or the second antenna part 212 is adapted to be installed on the door 2.

In a first variant, the first antenna part 211 is installed in the periphery of the door 2, so as to face a specific area as the door 2 is closed, and to not face that specific area as the door 2 is open. In case the door 2 is mounted on a door frame 20, the specific area facing the installed first antenna part 211 as the door 2 is closed, is located for example on the doorframe 20. In another example, or in case there is no doorframe 20, the specific area is located on a wall facing the closed door, and not facing the open door. The second antenna part 212 together with the first integrated circuit 210 are further installed on that specific area, so as to face the first antenna part 211 as the door 2 is closed and to not face the first antenna part 211 as the door 2 is open. The first antenna part 211 and the second antenna part 212 are configured to be coupled together as they are facing, and to be decoupled (or separated) as they are not facing. Various embodiments for coupling / decoupling (separating) the first antenna part 211 and the second antenna part 212 as they are facing / not facing, will be described later.

In a second variant the second antenna 212 together with the first integrated circuit 210 are installed in the periphery of the door 2, so as to face a specific area as the door 2 is closed, and to not face that specific area as the door 2 is open. In this second variant the first antenna part 211 is installed on that specific area similarly to the second antenna part 212 of the first variant.

In any of the variants, the first 211 and second 212 antenna parts are for example glued respectively on the door 2 and the specific area. In another example the first 211 and second 212 antenna parts are screwed respectively on the door 2 and the specific area. In yet another example, the first 211 and second 212 antenna parts are magnetically fixed respectively on the door 2 and the specific area. Any means for installing the first 211 and second 212 antenna parts respectively on the door 2 and the specific area are compatible with the disclosed principles.

As the wireless interrogator sends the first request on a RF carrier to the first RFID tag 21 while the first antenna part 211 faces the second antenna part 212, so as to be coupled with the second antenna part 212, the amount of energy being received from that RF carrier by the coupled first 211 and second 212 antenna parts (as depicted on figure 2b) is sufficient to power the first RFID tag 21, in order for the first RFID tag 21 to send back a first confirmation data to the wireless interrogator. Alternatively, as the wireless interrogator sends the first request to the first RFID tag while the first antenna part 211 does not face the second antenna part 212 (so as to be decoupled from the second antenna part 212), the amount of energy being received from the RF carrier by the first antenna part 211 alone, being separated from the second antenna part (as depicted on figure 2a), is not sufficient to power the first RFID tag, and no confirmation data is sent back by the first RFID tag to the wireless interrogator.

In a first variant, the first request belongs to the *inventorybasic* operation of the RFID protocol, and is for example the first query command transmitted in one of four sessions. In a second advantageous variant, the first request belongs to the *access* basic operation of the RFID protocol. In that second variant, the wireless interrogator, performed a preliminary inventory operation, for retrieving tag identifiers of the various available tags, and the first request sent to the first RFID tag 21 is for example a read request on the first RFID tag 21. Using a read transaction from the *access* basic operation is advantageous over for example an inventory query, because a read transaction is directed to a specific tag while an inventory query is directed to all the tags in range. Collisions may occur after sending an inventory query as several tags may respond at the same time, so that the interrogator is not able to determine which tags sent a confirmation. More generally, any other variant for sending a first request to a first RFID tag 21 on a RF carrier, being followed by a confirmation being sent back by the first RFID tag 21 is compatible with the disclosed principles.

In the step S15, the wireless interrogator checks whether a first confirmation data is received from the first RFID tag 21 in response to the first request. In case the first confirmation data is received from the first RFID tag 21, the operating status of the door 2 is detected as closed 201 in the step S18. In case no confirmation is received from the first RFID tag 21 in response to the first request, the operating status of the door 2 is detected as open 200 in the step S19. A possible technique for detecting an absence of confirmation data to a first request data is to listen to RF carriers for a given and fixed period of time. If no data is received from a RF carrier from the first RFID tag 21 during that period of time, the wireless interrogator concludes on an absence of confirmation from the first RFID tag 21. Any other technique for detecting an absence of confirmation is compatible with the disclosed principles.

### ELECTRICAL CONNECTION EMBODIMENT

In a first embodiment, illustrated in **Figure 2c**, the second antenna part 212 is electrically connected to the first antenna part 211 as the first antenna part 211 faces the second antenna part 212. For example two additional folded conducting sheets 2110, 2120, wherein at least one of the two is protruding, are installed along respectively the edge of the door 2 and the edge of the doorframe 20 so as to establish a direct electrical contact between the first antenna part 211 and the second antenna part 212 as the first antenna part 211 faces the second antenna part 212. Advantageously, one or both of the additional folded conducting sheets 2110, 2120 is / are a conducting spring.

Realizing a commutable electrical connection at the antenna level (i.e. between a first antenna part 211 and a second antenna part 212) rather than at the integrated circuit 210 level (i.e. between the antenna and the integrated circuit) is advantageous as it allows simplifying the manufacturing process of such RFID tags. The interconnection between the integrated circuit and the antenna is a critical step of the RFID manufacturing process requiring dedicated manufacturing hardware (sticking, soldering). The interconnection manufacturing step is indeed complex as it involves interconnecting at least two pieces of very different dimensions, from approximately 0.1 millimeter for the integrated circuit to several centimeters for the antenna. Realizing such a commutable interconnection requires therefore to adapt the dedicated manufacturing hardware, implying a significant increase of the overall manufacturing cost of the solution. Alternatively, realizing the commutable interconnection at the antenna level allows to keep standard and cost effective RFID manufacturing process, at least for manufacturing the interconnection between the integrated circuit and the first antenna part, and to implement the commutable interconnection at the antenna level, as a simple and low cost interconnection between two pieces of conducting material. In other words, realizing the commutable interconnection at the antenna level does not require to change the manufacturing process of the RFID tag, so that any low cost existing RFID tag can be adapted to the disclosed principles.

### ELECTROMAGNETIC COUPLING EMBODIMENT

In a second embodiment, illustrated in **Figure 2d**, the second antenna part 212 is electromagnetically coupled to the first antenna part 211 as the first antenna part 211 faces the second antenna part 212. For example two additional flat folded conducting sheets 2111, 2121 are installed along the edges of respectively the door 2 and the doorframe 20 so as to establish a capacitive coupling between the first antenna part 211 and the second antenna part 212 as the first antenna part 211 faces the second antenna part 212, as illustrated in Figure 2b. The capacitive coupling is obtained from the parallel plate capacitor generated by the face to face conducting sheets 2111, 2121 along the two edges of respectively the door 2 and the doorframe 20. Alternatively, the second antenna part 212 is electromagnetically decoupled from the first antenna part 211 as the first antenna part 211 does not face the second antenna part 212. Indeed, when the door is open, the two folded conducting sheets 2111, 2121, not facing each other anymore, do not constitute any parallel plate capacitor.

In the optional step S14, for any of the first or second embodiment, a second request is sent by the wireless interrogator to a second RFID tag 22, in order to improve the reliability of the detection. Advantageously, the second request is sent just after sending the first request of the step S12. Indeed, it may happen that the communication channel between the first RFID tag 21 and the wireless interrogator is disturbed and that, either the first RFID tag 21 does not receive the first request, although the first antenna part 211 is coupled to the second antenna part 212, or the wireless interrogator does not receive the first confirmation sent by the first RFID tag 21. The second RFID tag 22 disambiguates the wireless interrogator in case where no first confirmation is received from the first RFID tag 21 in allowing to discriminate a failure detection from an open door detection. To that end, the second RFID tag 22 also comprises a second RFID integrated circuit 220 connected to for example a dipole type antenna of two arms 223, 225 of a similar size and composition as the arms of the dipole-type antenna of the first RFID tag 21. The second RFID integrated circuit 220 has a sensitivity similar to the sensitivity of the first integrated circuit 210 and the dipole-type antenna of the second RFID tag 22 has a similar gain as the dipole-type antenna of the first RFID tag 21 as the first antenna part 211 is coupled to the second antenna part 212. For example the sensitivity of the second RFID integrated circuit belongs to a limited range of sensitivity of the sensitivity of the first integrated circuit for example within 10%. Similarly the antenna gain of the dipole-type antenna of the second RFID tag 22 belongs to a limited range of antenna gain values of the dipole-type antenna of the first RFID tag 21 as the first antenna part 211 is coupled to the second antenna part 212, for example 10%. The second RFID tag 22 is further adapted to be installed, in any of the variants, in the proximity of the first RFID tag 21.

In a first variant the second RFID tag 22 is packaged independently from the first RFID tag 21 and installed closed to the first RFID tag 21.

In a second advantageous variant, both the first 21 and the second 22 RFID tags are packaged together. More precisely, the second RFID tag 22 is packaged with any of the two separable parts of the first RFID tag 21, into a single un-separable packaging. For example, the second RFID tag 22 is adapted to be installed on the moving part of the system (i.e. the door or the window). Considering that the purpose of the second RFID tag 22 is to improve the reliability of the system to changing communication channel properties, installing the second RFID tag 22 in the moving part allows to also take into account network condition changes as the door gets opened or closed.

In the optional step S16, the interrogator checks whether a second confirmation data is received from the second RFID tag 22 in response to the second request. In case the operating status of the door 2 was detected as open 200 in the step S18, due to a lack of first confirmation reception, and in case the second confirmation data is received from the second RFID tag 22 in response to the second request, the door open 200 operating status is confirmed in the step S190. In case no confirmation is received from the second RFID tag 22 in response to the second request, as no first confirmation was received from the first RFID tag 21 in response to the first request, a failure is reported in the step S191, indicating that network conditions between the wireless interrogator and the first and/or second RFID tags prevent securely determining the operating status of the door 2.

**Figure 3a** depicts an interrogator processing device 3A for detecting an operating status of a door.

According to a specific and non-limiting embodiment, the wireless interrogator processing device 3A comprises a first wireless network interface 30 configured to send / receive information to / from one or more wireless tag devices by modulating / demodulating a RF carrier. According to different embodiments of the disclosed principles, the wireless network interface 30 belongs to a set comprising:
- A UHF RFID Air interface for the 860 MHz-960 MHz band, following the national regulations;
- A UHF RFID Air interface for the 433 MHz band following the national regulations;
- A RFID Air interface for the ISM 2.4 GHz band following the national regulations;
- A RFID Air interface for the 5.2 - 5.8 GHz band following the national regulations.
More generally any wireless network interface allowing to send / receive information to / from one or more wireless tag devices is compatible with the disclosed principles.

The first network interface 30 is linked to a processing module 34 configured to send a first request to a first tag via the wireless network interface 30, the first RFID tag comprising a first integrated circuit and a first antenna, the first antenna further comprising a first antenna part connected to the first integrated circuit and a second antenna part being operatively separable from and couplable to the first antenna part. One of either the first antenna part or the second antenna part of the first antenna is adapted to be installed on the door. The second antenna part is further adapted to be coupled to the first antenna part as the door is closed, and to be decoupled from the first antenna part as the door is open. The processing module 34 is further configured to detect a closed operating status of the door in case a first confirmation in received from the first tag in response to the first request, being received by the first tag as the first antenna part is coupled to the second antenna part. The processing module 34 is further configured to detect an open operating status of the door in case no confirmation is received from the first tag in response to the first request sent by the wireless interrogator processing device 3A as the first antenna part is decoupled from the second antenna part. According to a specific and non-limiting embodiment, the processing module 34 is further configured to process the detected operating status in the context of a smart home / building application.

According to a specific and non-limiting embodiment, the detected operating status is sent to another device via a second network interface 32. This other device is for example in charge of further data processing and/or user interface presentation to a user. According to different embodiments of the disclosed principles, the second network 32 interface belongs to a set comprising:
- An IEEE 802.11 interface comprising any variation of the IEEE 802.11 standard;
- A Bluetooth interface in any of its variant.
- A wired local area network interface such as for example Ethernet, MoCA or a power line interface;
- A bus interface as for example USB in any of its variant;
- A broadband network interface, comprising a wide area network interface such as xDSL, HFC, FTTx, WiMAX

According to a particular embodiment, the network interface 32 further comprises an internal or external display means, and the processing module 34 sends the detected operating status of the door to the display means.

According to different embodiments of the disclosed principles, the display means, internal or external, belongs to a set comprising:
- A display screen;
- a personal computer screen;
- a TV screen;
- a tablet;
- a smartphone screen.
More generally any display means allowing to display the detected door operating status, and any network interface allowing to send the detected door operating status to another device for further processing, are compatible with the disclosed principles.

**Figure 3b** depicts a RFID tag device 3B for detecting an operating status of a door. The RFID tag device 3B is an exemplary implementation of the RFID tag 21 of figures 2a, 2b, 2c, 2d. According to a specific and non-limiting embodiment, the RFID tag device 3B comprises an integrated circuit 38 connected to an antenna 36, comprising two separable parts 361 and 362, and corresponding to the first antenna part 211 and the second antenna part 212 of the Figure 2. The integrated circuit is configured to receive its operating energy from a modulated RF carrier and to send a backscattered reply as the two separable parts are coupled together (electrically connected or electromagnetically coupled, depending on the embodiments). The integrated circuit 38 is further configured to not receive a sufficient amount of operating energy for sending a backscattered reply as a RF carrier is received on the antenna part 361 alone, separated or decoupled from the antenna part 362.

**Figure 4** represents an exemplary architecture of the interrogator processing device 3A according to a specific and non-limiting embodiment, where the interrogator processing device 3A is configured to detect an operating status of a door. The interrogator processing device 3A comprises one or more processor(s) 410, which is (are), for example, a CPU, a GPU and/or a DSP (English acronym of Digital Signal Processor), along with internal memory 420 (e.g. RAM, ROM, EPROM). The interrogator processing device 3A comprises one or several Input/Output interface(s) 430 adapted to send to display output information and/or to allow a user to enter commands and/or data (e.g. a keyboard, a mouse, a touchpad, a webcam, a display), and/or to send / receive data over a network interface; and a power source 440 which may be external to the processing interrogator device 3A.

According to an exemplary and non-limiting embodiment, the interrogator processing device 3A further comprises a computer program stored in the memory 420. The computer program comprises instructions which, when executed by the interrogator processing device 3A, in particular by the processor 410, make the interrogator processing device 3A carry out the processing method described with reference to figure 1. According to a variant, the computer program is stored externally to the interrogator processing device 3A on a non-transitory digital data support, e.g. on an external storage medium such as a SD Card, HDD, CD-ROM, DVD, a read-only and/or DVD drive and/or a DVD Read/Write drive, all known in the art. The interrogator processing device 3A thus comprises an interface to read the computer program. Further, the interrogator processing device 3A could access one or more Universal Serial Bus (USB)-type storage devices (e.g., "memory sticks.") through corresponding USB ports (not shown).

According to exemplary and non-limiting embodiments, the interrogator processing device 3A is a device, which belongs to a set comprising:
- a RFID Interrogator;
- a Internet gateway device;
- a communication device.
- a set top box device;
- a TV device;
- a digital media player device;
- a game device ;
- a smartphone;
- a mobile device ;
- a tablet (or tablet computer) ;
- a laptop;
- a desktop;
- a server.

## Claims

1. A method for detecting a status of a door (2), said method comprising:
- sending (S12) a first request to a first tag (21) comprising a first integrated circuit (210) and a first antenna (215), the first antenna (215) further comprising a first antenna part (211) connected to the first integrated circuit (210), and a second antenna part (212) being operatively couplable to and operatively separable from the first antenna part (211), wherein:
∘ one of either the first antenna part (211) or the second antenna part (212) is adapted to be installed on the door (2);
∘ the second antenna part (212) is adapted to be coupled to the first antenna part (211) as the door (2) is closed, and to be separated from the first antenna part (211) as the door (2) is open;
- detecting (S18) a close status of the door (2) in case a first confirmation in received from the first tag (21) in response to the first request, said first request being received by the first tag (21) as the first antenna part (211) is coupled to the second antenna part (212).

2. The method according to claim 1, further comprising detecting (S19) an open status of the door (2) in case no confirmation is received from the first tag (21) in response to the first request sent by an interrogator as the first antenna part (211) is separated from the second antenna part (212).

3. The method according to any of claims 1 to 2, wherein the door (2) is mounted in a doorframe (20), the first antenna part (211) connected to the first integrated circuit (210) being further configured to be installed in the doorframe (20).

4. The method according to any of claims 1 to 3, wherein, the second antenna part (212) being coupled to the first antenna part (211) comprises the second antenna part (212) being electrically connected to the first antenna part (211), and the second antenna part (212) being separated from the first antenna part (211) comprises being electrically disconnected from the first antenna part (211).

5. The method according to any of claims 1 to 3, wherein, the second antenna part (212) being coupled to the first antenna part (211) comprises the second antenna part (212) being electromagnetically coupled to the first antenna part (211), and the second antenna part (212) being separated from the first antenna part (211) comprises the second antenna part (212) being electromagnetically decoupled from the first antenna part (211).

6. The method according to any of claims 2 to 5, further comprising sending (S14) a second request by the interrogator to a second tag (22), and confirming (S190) the detected open status of the door (2) in case a second confirmation is further received from the second tag (22) in response to the second request sent by the interrogator.

7. The method according to claim 6, further comprising reporting (S191) a failure of the detected open status of the door (2) in case no second confirmation is received from the second tag (22) in response to the second request sent by the interrogator.

8. The method according to any of claims 6 to 7, wherein the second tag (22) is installed closed to the first tag (21), the second tag (22) further comprising:
- a second integrated circuit (220) of a similar sensitivity as the first integrated circuit (210), and
- a second antenna (225) of a similar gain as said first antenna (215) as the first antenna part (211) faces the second antenna part (212).

9. A tag device adapted to detect a status of a door (2), said tag device comprising a first tag (21, 3B) further comprising:
a first integrated circuit (210, 38);
a first antenna (215, 36) comprising a first antenna part (211, 361) connected to the first integrated circuit (210, 36), and a second antenna part (212, 362) being operatively couplable to and operatively separable from the first antenna part (211,361), wherein
one of either the first antenna part (211, 361) or the second antenna part (212,362) is adapted to be installed on the door (2);
the second antenna part (212, 362) is adapted to be coupled to the first antenna part (211,361) as the door (2) is closed, and to be separated from the first antenna part (211, 361) as the door (2) is open;
the first integrated circuit (210, 38) being adapted to:
receive a first request sent by an interrogator as the first antenna part (211, 361) is coupled to the second antenna part (212, 362);
and to transmit a first confirmation in response to the received first request.

10. The tag device according to claim 9, wherein the first integrated circuit (210, 38) is further adapted to not receive the first request as the first antenna part (211, 361) is separated from the second antenna part (212, 362).

11. The tag device according to any of claims 9 to 10, wherein,
- the first antenna part (211, 361) comprises a first electromagnetic coupling means (2111);
- the second antenna part (212, 362) comprises a second electromagnetic coupling means (2121);
the second antenna part (212, 362) being electromagnetically coupled to the first antenna part (211, 361) as the first antenna part (211, 361) faces the second antenna part (212, 362), and is electromagnetically decoupled from the first antenna part (212, 362) as the first antenna part (211, 361) does not face the second antenna part (212, 362).

12. The tag device according to any of claim 9 to 11, further comprising a second tag (22) located closed to the first tag (21), the second tag (22) being configured to respond to a second request from the interrogator, the second tag (22) further comprising:
- a second integrated circuit (220) of a similar sensitivity as the first integrated circuit (210, 38), and
- a second antenna (225) of a similar gain as the first antenna (215) as the first antenna (211, 361) part is coupled to the second antenna part (212, 362).

13. An interrogator device (3A) for detecting a status of a door (2), the interrogator device comprising:
- Means (30) for sending a first request to a first tag (21) comprising a first integrated circuit (210) and a first antenna (215), the first antenna (215) further comprising a first antenna part (211) connected to the first integrated circuit (210) and a second antenna part (212) being operatively couplable to and operatively separable from the first antenna part (211), wherein:
∘ one of either the first antenna part (211) or the second antenna part (212) is adapted to be installed on the door (2);
∘ the second antenna part (212) is adapted to be coupled to the first antenna part (211) as the door (2) is closed, and to be separated from the first antenna part (211) as the door (2) is open;
- Means for receiving (30) a first confirmation from the first tag (21) in response to the first request;
- Means for detecting (34) a close status of the door (2) in case the first confirmation is received from the first tag (21) in response to the first request, the first request being received by the first tag (21) as the first antenna part (211) is coupled to the second antenna part (212

14. The Interrogator device according to claim 13, further comprising:
- means (30) for sending a second request to a second tag (22);
- means (34) for confirming the detected open status of the door (2) in case a second confirmation is further received from the second tag (22) in response to the second request; and
- means (34) for reporting a failure of the detected open status of the door (2) in case no second confirmation is received from the second tag (22) in response to the second request.

15. A computer program product for detecting a status of a door (2), the computer program product comprising program code instructions executable by a processor for executing the method according to any of claims 1 to 8.
